# FASCICULE DE BREVET EUROPEEN

(11) **EP 2 607 762 B1**
(45) Date de publication et mention de la délivrance du brevet: **16.10.2019**
(21) Numéro de dépôt: 12290414.7
(22) Date de dépôt: 27.11.2012
(51) Int. Cl.: E21B 17/10, F16L 9/04, F16L 13/04, F16L 13/02

(54) **Elément de conduite en tube fretté avec des éléments de transition**
Leitungselement umfassend ein Übergangssegment und einen geschrumpften Schicht.
Pipeline element comprising a transition segment and a shrunken layer.

(30) Priorité: 20.12.2011 FR 1103993
(43) Date de publication de la demande: 26.06.2013
(73) Titulaire: IFP Energies nouvelles, 92500 Rueil-Malmaison (FR)
(72) Inventeur: Poirette, Yann, 38121 Reventin-Vaugris (FR); Averbuch, Daniel, 69390 Vernaison (FR)
(74) Mandataire: IFP Energies nouvelles

(56) Documents cités:
- FR-A1- 2 828 262
- FR-A1- 2 956 694
- GB-A- 758 616
- US-A- 5 853 199
- US-A1- 2005 116 468

## Description

La présente invention concerne le domaine des conduites haute pression pour équiper une installation de forage pétrolier et/ou une installation de production. Plus précisément, elle concerne une application de la technique de frettage pour renforcer des tubes métalliques par des éléments de renfort en matériau composite.

La technique du frettage consiste à enrouler un élément de renfort généralement sous forme d'une bande en fibres enrobées dans un polymère, autour d'un noyau métallique afin d'augmenter la résistance du noyau à la pression interne sans augmenter son poids de manière significative compte tenu du faible poids des bandes.

Le noyau peut être un tube métallique, par exemple en acier. L'élément de renfort est un élément aiiongé. ii peut se présenter sous la forme d'un ruban, d'un fil, ou de préférence d'un ensemble de fils ou d'une mèche enrobée dans une matrice polymère.

Selon un mode de réalisation du frettage, l'élément de renfort est enroulé autour du noyau en y introduisant une tension. Ainsi, l'élément de renfort enroulé autour du noyau est contraint en traction ce qui introduit la mise sous contrainte de compression du noyau métallique. La précontrainte subie par le noyau est semblable à celle que produirait une pression extérieure.

Pour effectuer des opérations de forage d'un gisement sous-marin, on utilise une colonne montante, généralement appelée "riser", permettant de relier le bloc obturateur de puits, situé au niveau du fond marin, à la surface de la mer. La conduite "riser" est munie d'au moins deux conduites auxiliaires appelés "kill line" (KL) et "choke line" (CL) qui ont pour fonction principale d'établir une liaison hydraulique entre la surface de la mer et le fond marin. Plus particulièrement, les conduites auxiliaires permettent d'alimenter le puits en fluide en circulant sous un obturateur de sécurité fermé, et/ou d'évacuer un fluide du puits, sans passer par l'intérieur de la colonne montante qui n'est pas résistante à une haute pression. Le fluide convoyé, provenant d'une "venue" d'un réservoir sous-terrain peut circuler sous une pression pouvant atteindre plus de 700 bars.

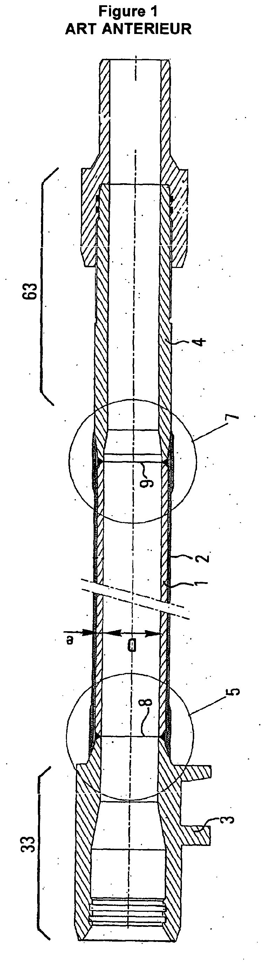

Pour réaliser des conduites auxiliaires d'une colonne montante de forage, il a été proposé, notamment dans les brevets FR 2 828 262 B1 et FR 2 828 121 B1 du demandeur, d'utiliser des tubes frettés. Cette réalisation d'un élément de conduite haute pression en tube fretté est à la fois simple et économique. La figure 1 représente un exemple de réalisation divulgué dans l'art antérieur. L'élément de conduite comporte quatre parties distinctes : un tube métallique (1) ou noyau, un premier moyen de raccordement (3), un deuxième moyen de raccordement (4) et des couches de frettage (2). Le tube (1) est fabriqué, par exemple à partir d'une ébauche laminée, puis, les moyens de raccordement (3 ; 4) sont directement soudés aux extrémités (8, 9) du tube (1). Ensuite, en enroulant un élément de renfort autour du tube (1) et d'une partie des moyens de raccordement (3, 4), on réalise le frettage de l'ensemble métallique. Seules les parties extérieures (33) et (63) des moyens de raccordement ne sont pas frettées et comportent une épaisseur suffisante pour résister au moins à la même pression interne que la partie fretté.

Ainsi, pour réaliser une telle conduite, il est obligatoire d'avoir des moyens de raccordement (3 ; 4) dont les dimensions (diamètres et épaisseur) des extrémités à souder sont adaptées au tube (1) pour pouvoir y être soudés directement. Ces moyens de raccordement (3 ; 4) doivent être mécaniquement compatibles avec la contrainte imposée par le frettage sur les zones de transition (5) et (7). Cependant les formes et les dimensions des moyens de raccordement sont également imposées par leurs spécifications opérationnelles et par les liaisons spécifiques d'intégration des lignes de sécurité sur le joint de "riser", et en particulier ia coopération avec les joints de "riser". L'ensemble des contraintes concernant les moyens de raccordement, nécessite une réalisation spécifique et complexe de ces moyens de raccordement.

Il n'est donc pas possible de standardiser la conception des éléments de conduite haute pression selon l'art antérieur (KL et CL) qui doivent avoir des raccords de connexion spécifiques au "riser". Les avantages principaux de la standardisation des pièces sont des gains de temps de conception, de fabrication et une réduction de coûts de fabrication.

La présente invention propose d'utiliser un élément de transition entre le tube fretté et les moyens de raccordement afin de permettre une standardisation des composants de l'élément de conduite, tels que le tube fretté et les moyens de raccordement, tout en conservant un poids réduit, une résistance suffisante à la pression interne, et une conception simple et économique.

### Le dispositif selon l'invention

L'invention concerne un élément de conduite comportant au moins un tube fretté, ledit tube fretté comprenant une partie centrale constituée d'un noyau métallique recouvert d'au moins une couche de frettage, au moins un moyen de raccordement. Ledit tube fretté comprend en outre au moins un élément de transition soudé d'un côté à une extrémité dudit noyau et de l'autre à une extrémité dudit moyen de raccordement.

Selon l'invention, lesdites couches de frettage s'étendent de part et d'autre de la soudure entre ledit élément de transition et ledit noyau.

Selon un mode de réalisation de l'invention, des couches de frettage supplémentaires s'étendent de part et d'autre de la soudure entre ledit élément de transition et ladite partie centrale.

Avantageusement, les couches de frettage sont constituées par des éléments de renfort en matériau composite, notamment à partir de fibres enrobés dans une matrice polymère. De préférence, les fibres de renfort sont choisies parmi les fibres de verre, les fibres de carbone et les fibres d'aramide et dans lequel la matrice polymère est choisie parmi un polyéthylène, un polyamide, un polyétheréthercétone, un polypropylène, un polyfluorure de vinylidène et un époxyde.

Selon l'invention, l'élément de transition comporte des extrémités géométriquement compatibles à la soudure d'un côté avec l'extrémité du noyau, et de l'autre coté à l'extrémité du moyen de raccordement.

De manière avantageuse, l'élément de transition possède une forme essentiellement tronconique entre ses deux extrémités. De préférence, la conicité de la partie tronconique de l'élément de transition est comprise entre 10° et 45°.

L'invention concerne également l'utilisation d'un élément de conduite selon l'invention pour la fabrication d'une ligne auxiliaire d'une colonne montante de forage.

En outre, l'invention concerne un procédé de réalisation d'un élément de conduite selon les caractéristiques décrites ci-dessus, dans lequel on réalise les étapes suivantes :
- on réalise une partie centrale métallique ;
- on soude sur au moins une extrémité de ladite partie centrale, un élément de transition ;
- on réalise au moins une couche de frettage sur ladite partie centrale, et de part et d'autre de la soudure entre ladite partie centrale et ledit élément de transition ;
- on soude un moyen de raccordement sur ledit élément de transition.

De préférence, on refroidit la zone frettée pendant l'étape de soudure dudit moyen de raccordement sur ledit élément de transition, de préférence par aspersion, par air froid ou par cryogénie.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre un élément de conduite selon l'art antérieur.
La figure 2 illustre un élément de conduite selon l'invention.
La figure 3 représente un élément de transition selon un mode de réalisation de l'invention.

### Description détaillée de l'invention

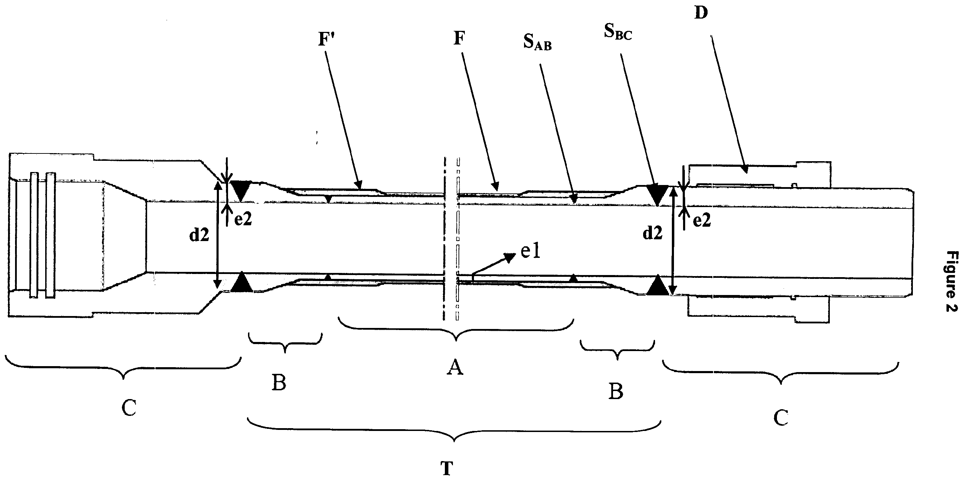

La figure 2 illustre un mode de réalisation d'un élément de conduite haute pression selon l'invention. L'élément de conduite haute pression est constitué d'un tube fretté (T) et de deux moyens de raccordement (C) non frettés utilisés habituellement dans la connexion des joints de "riser". On appelle moyen de raccordement (C), tout moyen permettant de connecter par l'intermédiaire d'un autre moyen de raccordement un élément de conduite avec un autre élément de conduite, avec un obturateur de puits ou avec un dispositif de récupération au niveau de la surface de la mer. Ces moyens de raccordement (C) sont des pièces tubulaires obtenues par exemple par usinage, forgeage ou meulage, indépendamment du tube fretté (T). Chaque élément de conduite comporte un moyen de raccordement mâle et femelle adaptés à coopérer. A leur extrémité destinée à être soudée audit tube fretté (T), les moyens de raccordement (C) (mâle et femelle) ont une forme tubulaire de diamètre externe d2 et d'épaisseur e2.

Le tube fretté (T) selon l'invention est constitué d'un noyau (A) et de deux éléments de transition (B) disposés respectivement entre une extrémité dudit noyau (A) et une extrémité d'un desdits moyens de raccordement (C). Le noyau (A) est constitué d'un tube métallique ayant un diamètre externe d1 et une épaisseur e1 sensiblement constants sur sa longueur et d'une couche de renfort. Classiquement, les dimensions dudit noyau (A) sont inférieures aux dimensions des moyens de raccordement (C) : d1 s d2 et e1 ≤ e2. De plus, le noyau (A) peut être fabriqué à partir d'une ébauche laminée, par exemple en acier. Les éléments de transition (B) sont des éléments tubulaires, pouvant être obtenus par forgeage en acier. Lesdits éléments de transition (B) sont soudés (S_{AB}) au noyau (A) et sont soudés (S_{BC}) respectivement à un moyen de raccordement (C), par toute méthode de soudage connue, notamment le soudage par friction. Pour assurer une bonne résistance à la pression interne, liée aux pressions de fluide circulant dans la conduite, le noyau (A) est recouvert sur au moins toute sa longueur d'un nombre de couches de frettage (F), réalisées par un élément de renfort. Dans le mode de réalisation préférentiel illustré, le frettage est appliqué également de part et d'autre de la zone de soudure (S_{AB}), donc également en partie sur les éléments de transition (B). Pour cette zone, des couches de frettage supplémentaires (F') sont appliquées. Les couches de frettage supplémentaires peuvent s'étendre sur au moins 50 mm sur ledit noyau (A). Le nombre de couches de frettage supplémentaires (F') est choisi de manière à ce que la résistance à la pression interne de la zone de soudure (S_{AB}) soit supérieure à la résistance à la pression interne de la zone centrale dudit noyau (A). Ainsi, l'élément de conduite présente l'avantage d'être plus résistant à la pression interne au niveau des zones de transition (S_{AB}) qu'au niveau du noyau (A).

L'élément de renfort (F) peut être réalisé à partir d'une matrice de polyamide renforcée par des fibres de carbone. Alternativement, on peut utiliser d'autres matrices, comme les époxydes, les polypropylènes, les polyéthylènes, les polyamides, les polyétheréthercétones, les polyfluorures de vinylidène ou d'autres fibres comme le verre ou les aramides. Le frettage comporte un nombre de couches suffisant pour que le tube résiste à une pression interne déterminée. Le nombre de couche de frettage (F) est généralement constant sur toute la longueur du noyau (A). Il est rappelé qu'un des principes du frettage consiste à induire une précontrainte de compression dans le noyau métallique (A) et dans la zone des éléments de transition (B) recouverte de couches de renfort. Ainsi précontraint, la capacité de résistance à la pression interne du noyau (A) est augmentée, puisque la pression admissible dans cet élément de conduite est augmentée de la valeur de la pression interne qui équilibrerait la pression de frettage. Un autre avantage du frettage est la diminution de la masse de l'élément de conduite. En effet, réaliser un élément de conduite uniquement en métal avec une même résistance à la pression interne nécessite une épaisseur de tube plus importante, ce qui implique une masse du tube plus élevée.

Selon un mode de réalisation, le frettage est réalisé par enroulement sous tension d'une ou plusieurs couches de renfort (F) sur le noyau (A) et une partie des éléments de transition (B). L'élément de renfort sous tension induit une contrainte de compression dans le noyau (A) et la partie recouverte des éléments de transition (B).

La surface extérieure du tube fretté (T) de l'élément de conduite selon l'invention peut être recouverte d'une enveloppe de protection, permettant notamment de le protéger du milieu marin. Cette enveloppe de protection peut être réalisée par bobinage, c'est à dire par enroulage d'un élément allongé autour du tube fretté (T) suivant des spires jointives et collées les unes aux autres. L'élément allongé peut être bobiné sans tension et peut être réalisé à partir d'une matrice en polyamide chargée de fibres de verre ou de Kevlar ®. L'enveloppe de protection peut également servir à donner la coloration externe du tube fretté, par exemple blanche.

Sur la figure 2, la pièce (D) représente un moyen de rattrapage de jeu.

En outre, l'invention peut comprendre une pièce d'usure, telle que représentée avec la référence 70 à la figure 1, destinée à coopérer avec un moyen de raccordement "femelle" (C) d'un autre élément de conduite. Cette pièce d'usure est fixée, de préférence vissée, sur un moyen de raccordement (C), en constituant la partie "mâle" de ce moyen de raccordement (C). A la suite d'un certain nombre de connexions entre éléments de conduite, le moyen de raccordement (C) "mâle" peut être endommagé. Dans ce cas, on pourra changer uniquement la pièce d'usure et pas l'ensemble des moyens de raccordement (C).

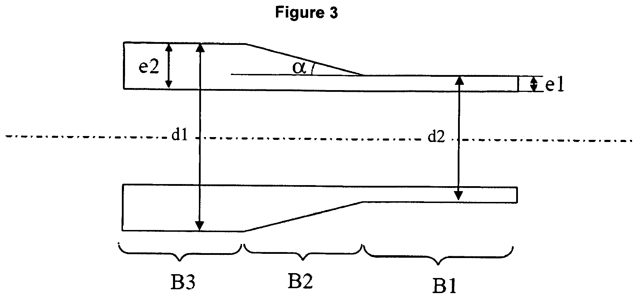

La figure 3 représente un mode de réalisation d'un élément de transition (B). Cet élément de transition possède une forme essentiellement tronconique, dans le but de relier les diamètres externes distincts d1 du noyau (A) et d2 du moyen de raccordement (C). Cette forme tronconique permet une continuité de la matière, ce qui assure une résistance à la pression interne.

Selon le mode de réalisation préféré de l'invention illustré à la figure 3, l'élément de transition (B) est formé d'une première partie (B1) cylindrique, une deuxième partie (B2) tronconique et une troisième partie (B3) cylindrique, de manière à réaliser un élément de transition de section continue, c'est-à-dire sans les discontinuités que peuvent former par exemple des épaulements. La première partie (B1) cylindrique est la partie soudée au noyau (A) et la troisième partie (B3) est la partie soudée à un desdits moyens de raccordement (C). De préférence, le diamètre externe d1 et l'épaisseur e1 de la première partie (B1) cylindrique sont sensiblement identiques au diamètre externe et à l'épaisseur du noyau (A). Ainsi le soudage de l'élément de transition (B) sur le noyau (A) est facilité. De même, le diamètre externe d2 et l'épaisseur e2 de la troisième partie (B3) cylindrique sont sensiblement identiques au diamètre externe et à l'épaisseur de l'extrémité du moyen de raccordement (C), pour faciliter l'opération de soudure.

La conicité de ladite partie tronconique (B2) est comprise entre 10° et 45°. En effet, la conicité de ladite partie tronconique doit être supérieure à 10° de manière à limiter la longueur de la partie (B2), afin de réduire la masse de l'élément de transition (B) et par conséquent la masse de l'élément de conduite. De plus, la conicité doit rester inférieure à 45° pour faciliter et améliorer l'enroulement de l'élément de renfort composite (F). En outre, les couches de frettage (F) et les couches de frettage supplémentaires (F') peuvent recouvrir en partie ladite deuxième partie (B2) tronconique. Sur cette zone de recouvrement de la deuxième partie (B2) le nombre de couches de frettage (F et F') diminue progressivement, car l'épaisseur de métal de l'élément de transition (B) devient suffisante pour résister à la pression interne.

Pour diminuer le poids de l'élément de transition (B), il est intéressant de limiter la longueur de la troisième partie (B3) cylindrique. Cette longueur est utile pour permettre le soudage du moyen de raccordement (C) sans entraîner d'endommagement thermique du renfort composite (F). Il est donc proposé d'utiliser un système de refroidissement de la zone frettée, par exemple par aspersion, par air froid ou par cryogénie, lors de la réalisation de la soudure (S_{BC}) entre l'élément de transition (B) et le moyen de raccordement (C). Ainsi, les couches de frettage (F) ne sont pas endommagées thermiquement lors de l'opération de soudure, même si la longueur de la troisième partie (B3) est faible, c'est-à-dire insuffisante pour éviter à elle seule les endommagements thermiques du frettage.

La réalisation d'un élément de conduite à l'aide d'un élément de transition (B), permet de concevoir et de fabriquer le noyau (A) et les moyens de raccordement (C) de manière indépendante, mais spécifiques à chacune des installations. Grâce à l'invention, pour des spécifications opérationnelles identiques seuls les éléments de transitions (B) peuvent nécessiter une adaptation de leurs dimensions et de leurs formes en fonction des éléments de raccordement (C) employés. En outre, grâce à l'invention, les moyens de raccordement (C) ne sont plus enrobés par des couches de frettage. Ainsi, il est possible d'utiliser directement les moyens de raccordement (C) habituellement employés dans les éléments de conduite haute pression.

En cas de nécessité, les moyens de raccordement peuvent être changés, en découpant au niveau de la soudure S_{BC}, et de nouveaux moyens peuvent être soudés à nouveau sur les éléments de transition du corps de la conduite selon l'invention.

L'élément de conduite selon l'invention peut être utilisé pour la fabrication d'une ligne auxiliaire d'une colonne montante de forage, par exemple une "kill line", une "choke line", une ligne de gavage ("booster line") ou une ligne de retour de boue.

Pour fabriquer un élément de conduite selon l'invention, on peut réaliser les étapes suivantes :
- on réalise le noyau (A) métallique, par exemple en acier, notamment à partir d'une ébauche laminée ;
- on soude sur au moins une extrémité dudit noyau (A), un élément de transition (B), et de préférence on soude sur chaque extrémité du noyau (A) un élément de transition (B) ;
- on réalise au moins une couche de frettage sur ledit noyau (A), et de part et d'autre des soudures (S_{AB}) entre ledit noyau (A) et ledit élément de transition (B), de préférence avec des couches de frettage supplémentaires s'étendant de part et d'autre des soudures (S_{AB}) ;
- on soude un moyen de raccordement (C) sur chaque élément de transition (B).

Selon un mode de réalisation, on refroidit la zone frettée pendant l'étape de soudure dudit moyen de raccordement (C) sur ledit élément de transition (B), de préférence par aspersion, par air froid ou par cryogénie.

### Variantes

En variante du mode de réalisation illustré, les caractéristiques suivantes peuvent être réalisées séparément ou en combinaison :
- le tube fretté (T) peut comporter un seul élément de transition (B), un des deux moyens de raccordement (C) étant soudé directement sur le noyau (A), pour réduire l'encombrement et le poids de l'élément de conduite ;
- la forme de l'élément de transition (B) peut être purement tronconique ;
- l'élément de transition (B) peut être un composant standard, ainsi tous les composants de l'élément de conduite haute pression sont des composants standards, dans ce cas, les diamètres et épaisseurs des extrémités de l'élément de transition (B) sont alors indépendants de la partie centrale (A) et des moyens de raccordement (C) ;
- la précontrainte impliquée dans le noyau par frettage peut être réalisée par d'autres moyens que la mise en traction de la bande de renfort, ainsi le frettage peut notamment être réalisé :
   ∘ par une mise en pression interne de l'élément de conduite entraînant une déformation plastique du noyau (A), cette technique est appelée l'auto-frettage : l'élément de renfort est enroulé sans tension ou sous très faible tension sur le tube métallique ; la contrainte de frettage est introduite lors d'une épreuve hydraulique du tube ainsi constitué à une pression provoquant le dépassement de la limite élastique dans le tube métallique et la déformation plastique du tube. Après retour à la pression nulle, il subsiste des contraintes résiduelles de compression dans le tube métallique et des contraintes de traction dans les éléments de renfort en composite, ou
   ∘ par une déformation du noyau (A) par traction du noyau (A) et en appliquant une pression sur l'extérieur du noyau (A) (ce procédé de réalisation est décrit dans une demande de brevet FR 2 961 427 du demandeur).

### Exemple de réalisation du frettage:

Pour réaliser un élément de conduite haute pression selon l'invention, on a utilisé le mode de réalisation illustré aux figures 2 et 3. Dix-huit couches de frettage (F) peuvent recouvrir le noyau (A) et la zone de recouvrement des deux soudures (S_{AB}). La première couche est déposée directement sur le noyau (A), la dernière couche constitue la surface extérieure du tube fretté. La tension appliquée dans les couches est fixée aux alentours d'une valeur de 2 400N. Pour augmenter la résistance à la pression interne au niveau de la soudure (S_{AB}), on dépose vingt-deux couches de frettage (F') supplémentaires de part et d'autres de la soudure (S_{AB}). La première couche des couches de frettage supplémentaires (F') repose directement sur la dernière couche des couches de frettage (F). La tension appliquée dans les couches de frettage supplémentaires peut être de 1000 N. Par exemple, les couches de frettage supplémentaires (F') s'étendent à partir de la soudure (S_{AB}) sur une longueur au moins égale à 50 mm sur le noyau (A) et sur une longueur au moins égale à 25 mm du côté de l'élément de transition (B). Au delà de la longueur sur laquelle s'étend les couches de frettage supplémentaires (F') sur la partie centrale, le nombre de couches de frettage supplémentaires décroit de vingt-deux à zéro.

## Revendications

1. Élément de conduite comportant au moins un tube fretté (T), ledit tube fretté (T) comprenant une partie centrale constituée d'un noyau métallique (A) recouvert d'au moins une couche de frettage (F), deux moyens de raccordement (C) non frettés, lesdits moyens de raccordement (C) étant des pièces tubulaires, l'un desdits moyens de raccordement (C) étant un moyen de raccordement mâle apte à coopérer avec l'autre moyen de raccordement (C), l'autre moyen de raccordement étant un moyen de raccordement femelle, le noyau métallique (A) étant constitué d'un tube métallique de diamètre externe d1 et d'épaisseur e1 sensiblement constants sur sa longueur, ladite couche de frettage (F) consistant en un enroulement d'un élément de renfort autour dudit noyau métallique (A), chacun des moyens de raccordement ayant une forme tubulaire de diamètre externe d2 et d'épaisseur e2 à l'extrémité destinée à être soudée au tube fretté (T) avec d2>d1 et e2>e1, **caractérisé en ce que** ledit tube fretté (T) comprend en outre deux éléments de transition (B), les deux éléments de transition (B) étant disposés entre une extrémité du noyau métallique (A) et l'extrémité d'un des moyens de raccordement (C), les deux éléments de transition (B) étant soudés à chaque extrémité dudit noyau (A) et de l'autre à une extrémité dudit moyen de raccordement (C), lesdits éléments de transition (B) étant des éléments tubulaires.

2. Élément selon la revendication 1, dans lequel lesdites couches de frettage (F) s'étendent de part et d'autre des soudures entre lesdits éléments de transition (B) et ledit noyau (A).

3. Élément selon la revendication 2, dans lequel des couches de frettage supplémentaires (F') s'étendent de part et d'autre des soudures entre lesdits éléments de transition (B) et ladite partie centrale (A).

4. Élément de conduite selon l'une des revendications précédentes dans lequel les couches de frettage (F, F') sont constituées par des éléments de renfort en matériau composite, notamment à partir de fibres enrobés dans une matrice polymère.

5. Élément de conduite selon la revendication 4 dans lequel les fibres de renfort sont choisies parmi les fibres de verre, les fibres de carbone et les fibres d'aramide et dans lequel la matrice polymère est choisie parmi un polyéthylène, un polyamide, un polyétheréthercétone, un polypropylène, un polyfluorure de vinylidène et un époxyde.

6. Élément de conduite selon l'une des revendications précédentes, dans lequel chaque élément de transition (B) comporte des extrémités géométriquement compatibles à la soudure d'un côté avec l'extrémité du noyau (A), et de l'autre coté à l'extrémité du moyen de raccordement (C).

7. Élément de conduite selon l'une des revendications précédentes, dans lequel l'élément de transition (B) possède une forme essentiellement tronconique entre ses deux extrémités.

8. Élément de conduite selon la revendication 7, dans lequel la conicité de la partie tronconique (B2) de l'élément de transition (B) est comprise entre 10° et 45°.

9. Utilisation d'un élément de conduite selon la revendication 1 pour la fabrication d'une ligne auxiliaire d'une colonne montante de forage.

10. Procédé de réalisation d'un élément de conduite selon l'une des revendications 1 à 8, dans lequel on réalise les étapes suivantes :
• on réalise une partie centrale (A) métallique ;
• on soude sur au moins une extrémité de ladite partie centrale (A), un élément de transition (B) ;
• on réalise au moins une couche de frettage sur ladite partie centrale (A), et de part et d'autre de la soudure (S_{AB}) entre ladite partie centrale (A) et ledit élément de transition (B) ;
• on soude un moyen de raccordement (C) sur ledit élément de transition (B).

11. Procédé selon la revendication 10, dans lequel on refroidit la zone frettée pendant l'étape de soudure dudit moyen de raccordement (C) sur ledit élément de transition (B), de préférence par aspersion, par air froid ou par cryogénie.

## Patentansprüche

1. Leitungselement, umfassend mindestens ein Schrumpfrohr (T), wobei das Schrumpfrohr (T) einen zentralen Teil umfasst, der von einem Metallkern (A) gebildet ist, der mit mindestens einer aufgeschrumpften Schicht (F) bedeckt ist, zwei nicht aufgeschrumpfte Anschlussmittel (C), wobei die Anschlussmittel (C) rohrförmige Teile sind, wobei eines der Anschlussmittel (C) ein Einsteckmittel ist, das geeignet ist, mit dem anderen Anschlussmittel (C) zusammenzuwirken, wobei das andere Anschlussmittel ein Aufnahmemittel ist, wobei der Metallkern (A) von einem Metallrohr mit einem Außendurchmesser d1 und einer Dicke e1, die im Wesentlichen über seine Länge konstant sind, gebildet ist, wobei die aufgeschrumpfte Schicht (F) in einer Wicklung eines Verstärkungselements um den Metallkern (A) besteht, wobei jedes der Anschlussmittel eine rohrförmige Form mit einem Außendurchmesser d2 und einer Dicke e2 an dem Ende hat, das dazu bestimmt ist, an das Schrumpfrohr (T) geschweißt zu werden, wobei d2>d1 und e2>e1, **dadurch gekennzeichnet, dass** das Schrumpfrohr (T) ferner zwei Übergangselemente (B) umfasst, wobei die Übergangselemente (B) zwischen einem Ende des Metallkerns (A) und dem Ende eines der Anschlussmittel (C) angeordnet ist, wobei die zwei Übergangselemente (B) an jedes Ende des Kerns (A) und andererseits an ein Ende des Anschlussmittels (C) geschweißt sind, wobei die Übergangselemente (B) rohrförmige Elemente sind.

2. Element nach Anspruch 1, bei dem sich die aufgeschrumpften Schichten (F) beiderseits der Schweißnähte zwischen den Übergangselementen (B) und dem Kern (A) erstrecken.

3. Element nach Anspruch 2, bei dem sich zusätzliche aufgeschrumpfte Schichten (F') beiderseits der Schweißnähte zwischen den Übergangselementen (B) und dem zentralen Teil (A) erstrecken.

4. Leitungselement nach einem der vorhergehenden Ansprüche, bei dem die aufgeschrumpften Schichten (F, F') von Verstärkungselementen aus Verbundstoff, insbesondere aus in einer Polymermatrix ummantelten Fasern, gebildet sind.

5. Leitungselement nach Anspruch 4, bei dem die Verstärkungsfasern unter den Glasfasern, den Kohlefasern und den Aramidfasern ausgewählt sind, und bei dem die Polymermatrix unter einem Polyethylen, Polyamid, Polyetherehterketon, Polypropylen, Vinyliden-Polyfluorid und Epoxid ausgewählt ist.

6. Leitungselement nach einem der vorhergehenden Ansprüche, bei dem jedes Übergangselement (B) Enden umfasst, die an der Schweißnaht auf einer Seite mit dem Ende des Kerns (A) und auf der anderen Seite mit dem Ende des Anschlussmittels (C) geometrisch kompatibel sind.

7. Leitungselement nach einem der vorhergehenden Ansprüche, bei dem das Übergangselement (B) eine im Wesentlichen kegelstumpfartige Form zwischen seinen zwei Enden besitzt.

8. Leitungselement nach Anspruch 7, bei dem die Konizität des kegelstumpfartigen Teils (B2) des Übergangselements (B) zwischen 10° und 45°liegt.

9. Verwendung eines Leitungselements nach Anspruch 1 für die Herstellung einer Hilfsleitung eines Bohrlochsteigrohrs.

10. Verfahren zur Herstellung eines Leitungselements nach einem der Ansprüche 1 bis 8, bei dem die folgenden Schritte durchgeführt werden:
• Herstellung eines zentralen Metallteils (A);
• Schweißen eines Übergangselements (B) auf mindestens ein Ende des zentralen Teils (A);
• Herstellung mindestens einer aufgeschrumpften Schicht auf dem zentralen Teil (A) und beiderseits der Schweißnaht (S_{AB}) zwischen dem zentralen Teil (A) und dem Übergangselement (B);
• Schweißen eines Anschlussmittels (C) auf das Übergangselement (B).

11. Verfahren nach Anspruch 10, bei dem die aufgeschrumpfte Zone während des Schritts des Schweißens des Anschlussmittels (C) auf das Übergangselement (B) vorzugsweise durch Besprühen mit kalter Luft oder durch Kryotechnik gekühlt wird.

## Claims

1. Pipe element having at least one hooped tube (T), said hooped tube (T) comprising a central part made up of a metal core (A) covered with at least one hooping layer (F), and two non-hooped connecting means (C), said connecting means (C) being tubular parts, one of said connecting means (C) being a male connecting means that is able to cooperate with the other connecting means (C), the other connecting means being a female connecting means, the metal core (A) being made up of a metal tube with an outside diameter d1 and a thickness e1 that are substantially constant along the length thereof, said hooping layer (F) consisting of a winding of a reinforcing element around said metal core (A), each of the connecting means having a tubular shape with an outside diameter d2 and a thickness e2 at the end that is intended to be welded to the hooped tube (T), where d2>dl and e2>el, **characterized in that** said hooped tube (T) also comprises two transition elements (B), the two transition elements (B) being disposed between one end of the metal core (A) and the end of one of the connecting means (C), the two transition elements (B) being welded to each end of said core (A) and on the other side to one end of said connecting means (C), said transition elements (B) being tubular elements.

2. Element according to Claim 1, wherein said hooping layers (F) extend on either side of the welds between said transition elements (B) and said core (A) .

3. Element according to Claim 2, wherein additional hooping layers (F') extend on either side of the welds between said transition elements (B) and said central part (A).

4. Pipe element according to one of the preceding claims, wherein the hooping layers (F, F') are made up of reinforcing elements made of composite material, notably from fibres coated in a polymer matrix.

5. Pipe element according to Claim 4, wherein the reinforcing fibres are chosen from glass fibres, carbon fibres and aramid fibres, and wherein the polymer matrix is chosen from a polyethylene, a polyamide, a polyether ether ketone, a polypropylene, a polyvinylidene fluoride and an epoxide.

6. Pipe element according to one of the preceding claims, wherein each transition element (B) has ends that are geometrically compatible with the weld on one side to the end of the core (A) and on the other side to the end of the connecting means (C) .

7. Pipe element according to one of the preceding claims, wherein the transition element (B) has a substantially frustoconical shape between its two ends.

8. Pipe element according to Claim 7, wherein the conicity of the frustoconical part (B2) of the transition element (B) is between 10° and 45°.

9. Use of a pipe element according to Claim 1 for manufacturing an auxiliary line of a drilling riser.

10. Method for producing a pipe element according to one of Claims 1 to 8, wherein the following steps are carried out:
- a metal central part (A) is produced;
- a transition element (B) is welded to at least one end of said central part (A);
- at least one hooping layer is produced on said central part (A), and on either side of the weld (S_{AB}) between said central part (A) and said transition element (B);
- a connecting means (C) is welded to said transition element (B).

11. Method according to Claim 11, wherein the hooped zone is cooled during the step of welding said connecting means (C) to said transition element (B), preferably by spraying, by cold air or by cryogenics.
